# EUROPÄISCHE PATENTANMELDUNG

(11) **EP 2 357 123 A2**
(43) Veröffentlichungstag der Anmeldung: **17.08.2011**
(21) Anmeldenummer: 11001236.6
(22) Anmeldetag: 15.02.2011
(51) Int. Cl.: B62H 5/14

(54) **Zweirad-Schloss**

(30) Priorität: 16.02.2010 DE 102010008054
(71) Anmelder: ABUS August Bremicker Söhne KG, 58300 Wetter-Volmarstein (DE)
(72) Erfinder:
(74) Vertreter: Manitz, Finsterwald & Partner GbR

(57) **Zusammenfassung**

Ein Zweirad-Schloss umfasst einen Sperrriegel (16), welcher zwischen einer Verriegelungsstellung und einer Freigabestellung verstellbar ist, und eine Klobenaufnahme (30) für einen Kloben (32) eines Sicherungsseils, wobei die Klobenaufnahme (30) eine Rasteinrichtung aufweist, an der der Kloben (32) verrastbar ist, um den Kloben in der Klobenaufnahme zu halten. Das Schloss umfasst ferner eine Blockiereinrichtung, welche derart mit dem Sperrriegel (16) zusammenwirkt, dass die Blockiereinrichtung die Rasteinrichtung gegen ein Entnehmen des Klobens aus der Klobenaufnahme blockiert, wenn sich der Sperrriegel (16) in seiner Verriegelungsstellung befindet. Die Blockiereinrichtung gibt die Rasteinrichtung für ein Entnehmen des Klobens (32) aus der Klobenaufnahme frei, wenn sich der Sperrriegel (16) in seiner Freigabestellung befindet.

## Beschreibung

Die Erfindung betrifft ein Zweirad-Schloss mit einem Sperrriegel, welcher zwischen einer Verriegelungsstellung und einer Freigabestellung verstellbar ist, und einer Klobenaufnahme für einen Kloben eines Sicherungsseils, wobei die Klobenaufnahme eine Rasteinrichtung aufweist, in der der Kloben verrastbar ist, um den Kloben in der Klobenaufnahme zu halten.

Ein derartiges Zweirad-Schloss kann beispielsweise als Rahmenschloss ausgebildet sein, welches an dem Rahmen eines Zweirads montiert ist. In der Verriegelungsstellung durchquert der Sperrriegel ein Speichenrad des Zweirads und blockiert dieses. In der Klobenaufnahme kann außerdem ein Sicherungsseil an dem Zweirad-Schloss befestigt werden, welches ein zusätzliches Sichern des Zweirads an einem Befestigungsobjekt, beispielsweise an einem Laternenpfosten gestattet. Dadurch ist das Zweirad nicht nur aufgrund des Eingriffs des Sperrriegels in das Speichenrad gegen ein unbefugtes Wegfahren gesichert, sondern das Zweirad kann auch nicht von dem Befestigungsobjekt entfernt, beispielsweise weggetragen werden.

Ein gattungsgemäßes Zweirad-Schloss mit einem Rundbügel als Sperrriegel ist beispielsweise aus DE 102 52 080 A1 bekannt. Bei diesem Schloss ist ein Sicherungselement zum Sichern oder Freigeben des in der Klobenaufnahme aufgenommenen Klobens vorgesehen. Das Sicherungselement wird durch den Rundbügel gesteuert. Bei einer der in DE 102 52 080 A1 offenbarten Ausführungsformen kann der Kloben in der Freigabestellung des Rundbügels aus der Klobenaufnahme wieder herausfallen, bevor der Rundbügel in seine Verriegelungsstellung verschwenkt wurde. Bei anderen Ausführungsformen ist es notwendig, zur Entnahme des Klobens aus der Klobenaufnahme den Rundbügel von Hand in eine weitere, von der Freigabestellung verschiedene Verstellposition zu bewegen. Dadurch ist die Handhabung des Schlosses relativ unkomfortabel.

Daher ist es die Aufgabe der Erfindung, ein Zweirad-Schloss mit einem einfachen Aufbau zu schaffen, an dem ein Kloben eines Sicherungsseils bei komfortabler Handhabung zuverlässig gesichert werden kann.

Diese Aufgabe wird durch ein Zweirad-Schloss mit den Merkmalen des Anspruchs 1 gelöst und insbesondere dadurch, dass das Schloss eine Blockiereinrichtung umfasst, welche derart mit dem Sperrriegel gekoppelt ist, dass die Blockiereinrichtung, wenn sich der Sperrriegel in seiner Verriegelungsstellung befindet, eine Sicherungsstellung einnimmt, in der die Blockiereinrichtung die Rasteinrichtung gegen ein Entnehmen des Klobens aus der Klobenaufnahme blockiert, und dass die Blockiereinrichtung, wenn sich der Sperrriegel in seiner Freigabestellung befindet, eine Entsicherungsstellung einnimmt, in der die Blockiereinrichtung die Rasteinrichtung für ein Entnehmen des Klobens aus der Klobenaufnahme freigibt.

Das erfindungsgemäße Zweirad-Schloss zeichnet sich also dadurch aus, dass der Kloben unabhängig von der Verstellposition des Sperrriegels grundsätzlich durch die Rasteinrichtung in dem Kloben gehalten wird. Dadurch wird verhindert, dass der Kloben unbeabsichtigt und unbemerkt durch den Benutzer aus der Klobenaufnahme herausfallen kann. Somit wird beispielsweise vermieden, dass der Benutzer den Sperrriegel in die Verriegelungsstellung unter der Annahme verstellt, dass sich der Kloben in der Klobenaufnahme befindet, obwohl dieser zwischenzeitlich unbemerkt aus der Klobenaufnahme hinausgerutscht ist und damit eine Sicherung des Zweirades durch das Sicherungsseil nicht mehr gegeben ist.

Sofern eine der Rasteinrichtung zugeordnete Blockiereinrichtung sich in einer Entsicherungsstellung befindet, kann der Kloben aus der Klobenaufnahme entnommen werden, ohne dass es einer zusätzlichen Verstellung des Sperrriegels bedarf. Es müssen lediglich die Haltekräfte der Rasteinrichtung überwunden werden.

Die Blockiereinrichtung ist allerdings mit dem Sperrriegel derart antriebswirksam gekoppelt, dass durch Verstellen des Sperrriegels aus der Freigabestellung in die Verriegelungsstellung die Blockiereinrichtung in eine Sicherungsstellung bewegt wird. In dieser Sicherungsstellung blockiert die Blockiereinrichtung die Rasteinrichtung. Somit erfolgt mittels der Blockeinrichtung beim Verriegeln des Zweirad-Schlosses automatisch eine Blockierung der Rasteinrichtung, so dass ein Entnehmen des Klobens aus der Klobenaufnahme nicht mehr möglich ist. Hierdurch ergibt sich eine komfortable Handhabung und zugleich eine zuverlässige Sicherung des Klobens an dem Zweirad-Schloss.

Gemäß einer vorteilhaften Ausführungsform umfasst die Rasteinrichtung wenigstens ein bewegliches Rastelement, das in Richtung einer Fixierstellung vorgespannt ist, insbesondere durch Eigenspannung oder durch eine separate Feder. In der Fixierstellung ragt das Rastelement in die Klobenaufnahme hinein, um einen in die Klobenaufnahme eingesetzten Kloben eines Sicherungsseils zu halten. Bei dem genannten Rastelement kann es sich beispielsweise um einen Sperrstift, eine Sperrkugel, einen flexiblen Raststeg, einen flexiblen Rastarm oder eine rückfedernd gelagerte Rastnase handeln.

Es ist bevorzugt, wenn das genannte Rastelement in seiner Fixierstellung durch die Blockiereinrichtung blockierbar ist. Dadurch bewirkt das jeweilige Rastelement nicht nur eine präzise Verrastung, sondern auch eine zuverlässige Blockierung oder Sicherung des Klobens in der Klobenaufnahme, wenn sich der Sperrriegel in der Verriegelungsstellung befindet.

Vorzugsweise sind zwei einander gegenüber liegende Rasteelemente vorgesehen, um eine besonders zuverlässige Rastverbindung mit dem Kloben zu ermöglichen.

Insbesondere kann die Rasteinrichtung zwei parallel voneinander beabstandete, quer zu ihrer Längsrichtung und quer zur Längsrichtung der Klobenaufnahme bewegliche Sperrstifte aufweisen, die in ihrer Fixierstellung in eine an dem Kloben vorgesehene Rastaufnahme eingreifen, um den Kloben in der Klobenaufnahme zu halten, und die in Richtung der Fixierstellung vorgespannt sind. Die Sperrstifte gestatten eine präzise Verrastung des Klobens in der Freigabestellung des Sperrriegels.

Gemäß einer vorteilhaften Ausführungsform sind die genannten Sperrstifte durch zwei zwischen den Sperrstiften wirksame Federn, welche bevorzugt an jeweiligen Endabschnitten der Sperrstifte befestigt sind, in Richtung der Fixierstellung vorgespannt. Dies stellt eine einfache konstruktive Maßnahme dar, um die für eine Verrastung erforderliche Vorspannung in Richtung der Fixierstellung herzustellen.

Anstelle der genannten zwei Sperrstifte mit separaten Federn kann beispielsweise ein C- oder O-förmiges Federelement vorgesehen sein, an dem zwei flexible Stegabschnitte einstückig ausgebildet sind.

Gemäß einer bevorzugten Ausführungsform weist die Blockiereinrichtung wenigstens einen Blockierarm auf, der zwischen der Sicherungsstellung und der Entsicherungsstellung bewegbar ist. In der Sicherungsstellung hintergreift der Blockierarm das jeweilige Rasteelement (z.B. den Sicherungsstift oder die Rastnase), um das Rastelement in seiner Fixierstellung zu blockieren. In der Entsicherungsstellung gestattet der Blockierarm ein Zurückweichen des jeweiligen Rastelements aus der Klobenaufnahme, so dass der Kloben aus der Klobenaufnahme entnommen werden kann.

Vorzugsweise umfasst die Blockiereinrichtung zwei zwischen der Sicherungsstellung und der Entsicherungsstellung verstellbare Blockierarme, die in der Sicherungsstellung die vorgenannten Sperrstifte umgreifen und in ihrer Fixierstellung blockieren, wenn sich der Sperrriegel in seiner Verriegelungsstellung befindet, und die in der Entsicherungsstellung die Sperrstifte für ein Entnehmen des Klobens aus der Klobenaufnahme freigeben, wenn sich der Sperrriegel in seiner Freigabestellung befindet. Durch die Blockierarme wird auf einfache Weise eine zuverlässige Blockierung der Sperrstifte in der Verriegelungs- bzw. Sicherungsstellung erreicht.

Gemäß einer vorteilhaften Weiterbildung ist die Blockiereinrichtung in einem Gehäuse aufgenommen, welches ausgebildet ist, einem gewaltsamen Auseinanderbiegen der Blockierarme durch eine auf den Kloben ausgeübte Kraft entgegenzuwirken, welche beispielsweise die vorgenannten Sperrstifte aus ihrer Fixierstellung heraus gegen die Blockierarme presst. Das Gehäuse verleiht dem Schloss somit eine zusätzliche Aufbruchsicherheit.

Weiterhin ist es bevorzugt, wenn ein Gehäuse, das die Blockiereinrichtung im Bereich der Klobenaufnahme überdeckt und das insbesondere dem vorgenannten Gehäuse entspricht, einen Fortsatz aufweist, der die Blockiereinrichtung auch außerhalb der Klobenaufnahme zumindest teilweise überdeckt, um die Blockiereinrichtung gegen einen Manipulationsversuch von außen zu schützen.

Bevorzugt ist die Blockiereinrichtung um eine Drehachse zwischen der Sicherungsstellung und der Entsicherungsstellung schwenkbar. Alternativ hierzu kann jedoch auch eine geradlinige Beweglichkeit der Blockiereinrichtung vorgesehen sein.

Es ist von besonderem Vorteil, wenn die Blockiereinrichtung einen Nocken aufweist, welcher mit einer an dem Sperrriegel vorgesehenen Steuerfläche derart zusammenwirkt, dass die Blockiereinrichtung zwangsläufig in die Sicherungsstellung bewegt wird, wenn der Sperrriegel in die Verriegelungsstellung verstellt wird. Dadurch wird nicht nur eine besonders einfache Steuerung der Blockiereinrichtung realisiert. Vor allem erhöht diese Zwangsführung die Sicherheit des Schlosses weiter, da der Sperrriegel nicht in seine Verriegelungsstellung bewegt werden kann, wenn eine Sicherung oder Blockierung der Rasteinrichtung durch die Blockiereinrichtung nicht möglich ist, beispielsweise aufgrund eines nicht vollständig in die Klobenaufnahme eingeführten Klobens. Zudem ist es dadurch auch nicht möglich, die Blockiereinrichtung zu manipulieren, beispielsweise durch die so genannte "Hammerschlagmethode", also durch kurzzeitiges Versetzen der Blockiereinrichtung in die Entsicherungsstellung durch Beaufschlagung des Schlosses mit einem Stoß.

Weiterhin ist es bevorzugt, wenn die Blockiereinrichtung durch eine Feder in Richtung der Entsicherungsstellung derart vorgespannt ist, dass der Nocken an der Steuerfläche des Sperrriegels anliegt. Alternativ hierzu kann die Blockiereinrichtung jedoch auch durch eine von dem Sperrriegel bewegte Kulisse aus der Sicherungsstellung in die Entsicherungsstellung geführt werden.

Bevorzugt weist die Steuerfläche eine Ausnehmung auf, in welcher der Nocken aufgenommen ist, wenn sich der Sperrriegel in der Freigabestellung befindet.

Besonders vorteilhafte Anwendung findet die Erfindung, wenn das Zweirad-Schloss als ein Rahmenschloss ausgebildet ist und der Sperrriegel, durch einen drehbaren Rundbügel gebildet ist.

Weitere vorteilhafte Ausführungsformen sind in den Unteransprüchen, der Beschreibung und den Zeichnungen angegeben.

Die Erfindung wird nachfolgend anhand eines Ausführungsbeispiels mit Bezug auf die Zeichnungen beschrieben. Es zeigen:
- Fig. 1: ein Rahmenschloss in Explosionsdarstellung;
- Fig. 2 und 3: Aussichten des Rahmenschlosses gemäß Fig. 1 in verschiedenen Verstellpositionen unter Weglassung einiger Details;
- Fig. 4: eine perspektivische Detailansicht der Rasteinrichtung und der Blockiereinrichtung des Rahmenschlosses gemäß Fig. 1 einschließlich eines darin fixierten Klobens eines Sicherungsseils; und
- Fig. 5: eine Detailansicht der Rasteinrichtung und der Blockiereinrichtung des Rahmenschlosses gemäß Fig. 1 einschließlich eines darin fixierten Klobens eines Sicherungsseils.

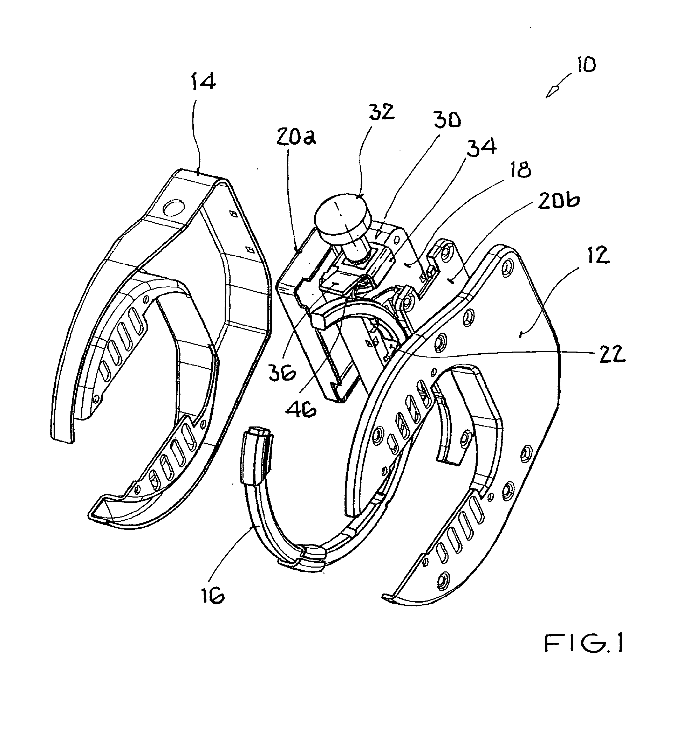

Fig. 1 bis 5 zeigen schematisch den Aufbau eines erfindungsgemäßen Zweirad-Schlosses beispielhaft anhand eines Rahmenschlosses 10 zur Montage an den Hinterradstreben eines Fahrrads.

Das Rahmenschloss 10 umfasst ein Außengehäuse, welches aus einem Unterteil 12 und einem Oberteil 14 zusammengesetzt ist und die weiteren Komponenten des Rahmenschlosses 10 umschließt.

Im Inneren des Rahmenschlosses 10 ist als Sperrriegel ein drehbarer Rundbügel 16 zum Umgreifen der Hinterradfelge vorgesehen.

Der Rundbügel 16 ist bei dem hier gezeigten Beispiel mittels einer Betätigungseinheit 18 elektromotorisch zwischen einer Verriegelungsstellung und einer Freigabestellung verstellbar. Die Kraftübertragung auf den Rundbügel 16 erfolgt mittels eines hier nicht näher beschriebenen Bandantriebs.

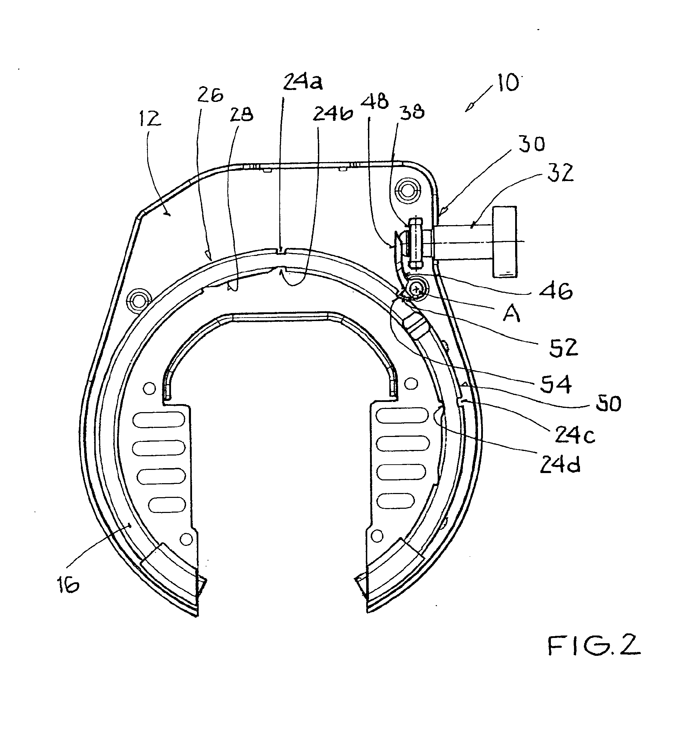

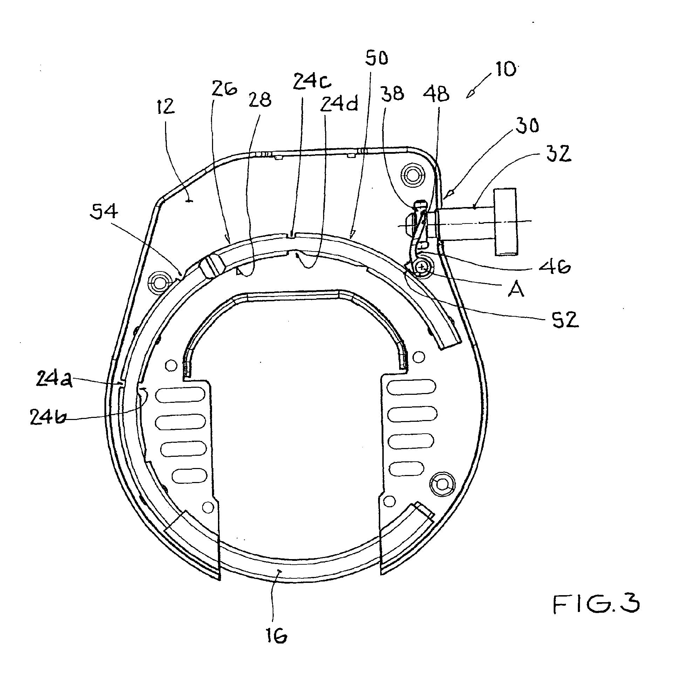

Die Betätigungseinheit 18 umfasst ferner zwei radial zur Verstellrichtung des Rundbügels 16 verschiebbare Sicherungselemente, von denen in Fig. 1 lediglich ein Sicherungselement 22 sichtbar ist. Die Sicherungselemente 22 wirken mit Vertiefungen 24a bis 24d zusammen, welche paarweise voneinander beabstandet am Außenumfang 26 bzw. Innenumfang 28 des Rundbügels 16 vorgesehen sind (Fig. 2 und 3). Zum Verstellen der Sicherungselemente 22 ist ebenfalls ein nicht dargestellter elektromotorischer Antrieb vorgesehen.

Grundsätzlich kann die Betätigung des Rundbügels 16 und der Sicherungselemente 22 alternativ auch mechanisch in an sich bekannter Weise erfolgen, beispielsweise mittels einer an dem Rundbügel 16 vorgesehenen Handhabe bzw. eines die Sicherungselemente 22 betätigenden Schließzylinders, wie dies beispielsweise aus der eingangs genannten DE 102 52 080 A1 bekannt ist.

Die Betätigungseinheit 18 ist zwischen zwei Innengehäuseschalen 20a, 20b eingeschlossen, welche zusätzlich zu dem Außengehäuse einen weiteren Schutz gegen Manipulationsversuche darstellen.

Die Betätigungseinheit 18 umfasst weiterhin eine Klobenaufnahme 30 für einen Kloben 32, welcher an einem Ende eines nicht dargestellten Sicherungsseils befestigt ist. Bei dem Sicherungsseil kann es sich beispielsweise um ein Stahlseil, ein Seil mit gehärteten Hülsen, ein Spiralkabel, eine Kette oder einen Gelenkstabbügel handeln. Das dem Kloben 32 gegenüberliegende Ende des Sicherungsseils kann als Schlaufe ausgebildet sein, die die Ausbildung einer Schlinge zum Umgreifen beispielsweise eines Laternenpfostens ermöglicht. Es ist jedoch auch möglich, dass das dem Kloben 32 gegenüberliegende Ende des Sicherungsseils an dem Rahmenschloss 10 dauerhaft befestigt ist, so dass das Rahmenschloss 10 und das Sicherungsseil eine einzige Einheit bilden. Das Rahmenschloss 10 und das Sicherungsseil bilden gemeinsam ein Sicherungssystem.

An der Klobenaufnahme 30 ist zusätzlich zu dem genannten Außengehäuse ein Mantelgehäuse 34 mit einem Fortsatz 36 vorgesehen, welches vorzugsweise aus gehärtetem Stahl hergestellt ist. Der Fortsatz 36 wirkt als zusätzlicher Schutz gegen Manipulationsversuche, insbesondere als Schutz für einen Blockierhebel 46 als Bestandteil einer noch näher zu erläuternden Blockiereinrichtung. Mit anderen Worten überdeckt der Fortsatz 36 die Blockiereinrichtung in einem zu der Klobenaufnahme 30 benachbarten Bereich, und zwar bezogen auf eine gedachte Angriffsrichtung, die parallel zu der Einführrichtung des Klobens 32 durch das Außengehäuse (Oberteil 14) hindurch verläuft.

Im Inneren der Betätigungseinheit 18 ist ferner eine in Fig. 1 durch das Mantelgehäuse 34 verdeckte Rasteinrichtung vorgesehen, welche anhand der Fig. 2 bis 5 nachfolgend näher erläutert wird.

Die Rasteinrichtung umfasst zwei parallel voneinander beabstandete, quer zu ihrer Längsrichtung und quer zur Längsrichtung der Klobenaufnahme 30 bewegliche Sperrstifte 38, welche in einer Fixierstellung in eine als Rastaufnahme wirkende Umfangsnut 40 des Klobens 32 eingreifen. Die Enden des einen Sperrstifts 38 sind über jeweilige S-förmig gebogene Blattfedern 42 mit den jeweiligen benachbarten Enden des anderen Sperrstifts 38 verbunden. Die Blattfedern 42 bewirken eine Vorspannung der Sperrstifte 38 in Richtung ihrer Fixierstellung, d.h. aufeinander zu.

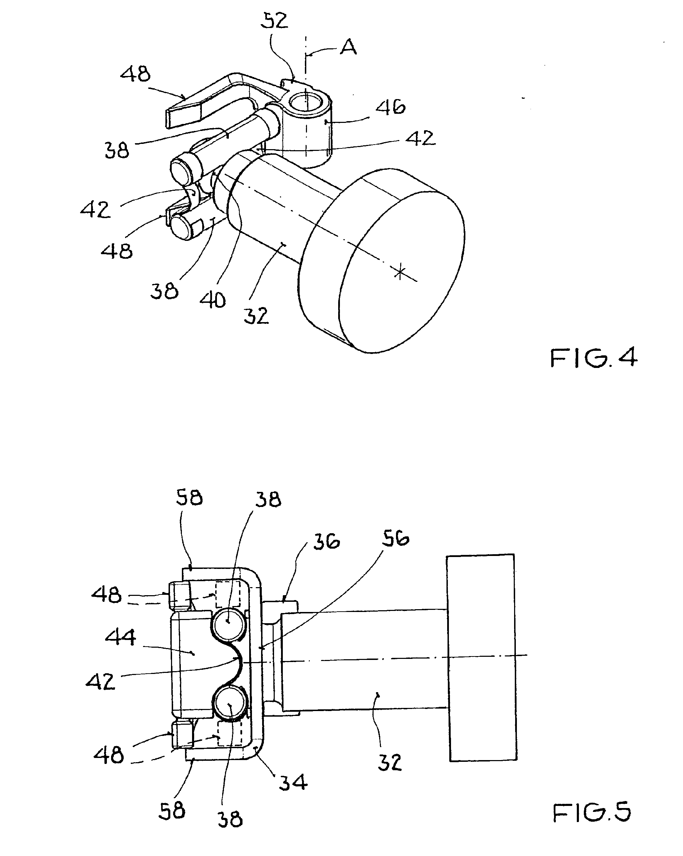

Die Klobenaufnahme 30 umfasst gemäß Fig. 5 ein topfartiges Aufnahmeelement 44, in welchem die Sperrstifte 38 in der vorstehend genannten Weise beweglich gehalten sind.

In einer in den Fig. 2, 4 und 5 dargestellten Entsicherungsstellung ist eine Entnahme des Klobens 32 aus der Klobenaufnahme 30 möglich, wobei sich die Sperrstifte 38 unter Streckung der Blattfedern 42 voneinander wegbewegen.

Mit Bezug nun wieder auf die Fig. 2 bis 5 wird die Funktionsweise der Blockiereinrichtung erläutert.

Diese umfasst den um eine Drehachse A schwenkbaren Blockierhebel 46, welcher mittels einer nicht dargestellten Spiralfeder in Richtung einer Entsicherungsstellung (Fig. 2, 4 und 5) vorgespannt ist. Der Blockierhebel 46 weist zwei Blockierarme 48 auf, welche in einer Verriegelungsstellung (Fig. 3) die Sperrstifte 38 umgreifen, so dass die Sperrstifte 38 in ihrer Fixierstellung, in der sie sich in Eingriff mit der Umfangsnut 40 des Klobens 32 befinden, blockiert oder gesichert sind und damit eine Entnahme des Klobens 32 aus der Klobenaufnahme 30 nicht möglich ist.

Der Blockierhebel 46 weist einen Nocken 52 auf, welcher mit einer an dem Außenumfang 26 des Rundbügels 16 vorgesehenen Steuerfläche 50 zusammenwirkt. Die Steuerfläche 50 umfasst eine Ausnehmung 54, in welche der Nocken 52 bei Erreichen der Freigabestellung des Rundbügels 16 aufgrund der Vorspannung durch die Spiralfeder eintaucht. Dadurch führt der Blockierhebel 46 eine Drehbewegung entgegen dem Uhrzeigersinn aus, so dass die Blockierarme 48 die Sperrstifte 38 freigeben und damit eine Entnahme des Klobens 32 aus der Klobenaufnahme 30 möglich ist (Entsicherungsstellung der Blockiereinrichtung). Der Kloben 32 kann nun also aus der Klobenaufnahme 30 entnommen werden, wobei die Sperrstifte 38 entgegen ihrer Verspannung kurzzeitig aus der Klobenaufnahme 30 herausgedrängt werden, d.h. zurückweichen.

Wird der Rundbügel 16 aus der Freigabestellung (Fig. 2) in Richtung der Verriegelungsstellung (Fig. 3) verstellt, wird der Nocken 52 unmittelbar nach Beginn der Verstellbewegung automatisch aus der Ausnehmung 54 verdrängt, so dass sich der Blockierhebel 46 nunmehr in Richtung des Uhrzeigersinns in die Sicherungsstellung (Fig. 3) dreht und die Blockierarme 48 die Sperrstifte 38 wieder sichern oder blockieren. Ein in der Klobenaufnahme 30 befindlicher Kloben 32 ist dadurch gefangen, d.h. am Rahmenschloss 10 gesichert.

Anhand von Fig. 5 wird die Funktion des bereits mit Bezug auf Fig. 1 erwähnten Mantelgehäuses 34 erläutert.

Das Mantelgehäuse 34 weist einen U-förmigen Querschnitt mit einer Basis 56 und zwei sich senkrecht zur Basis 56 erstreckenden Wandungen 58 auf. Das Mantelgehäuse 34 umgreift mit seinen Wandungen 58 die Blockierarme 48 des Blockierhebels 46 sowohl in der Entsicherungsstellung als auch in der Sicherungsstellung, in welcher die Blockierarme 48 durch Strichelung angedeutet sind.

Da sich die Blockierarme 48 in der Sicherungsstellung sehr nahe an der Basis 56 befinden und damit nur ein geringer Hebelarm wirksam wird, bewirkt das Mantelgehäuse 34 einen zusätzlichen Schutz gegen eine gewaltsame Entnahme des Klobens 32 aus der Klobenaufnahme 30, da es einem gewaltsamen Auseinanderbiegen der Blockierarme 48 durch eine auf den Kloben 32 ausgeübte Zugkraft, welche die Sperrstifte 38 aus ihrer Fixierstellung heraus gegen die Blockierarme 48 presst, entgegenwirkt.

### Bezugszeichenliste

- 10: Rahmenschloss
- 12: Unterteil
- 14: Oberteil
- 16: Rundbügel
- 18: Betätigungseinheit
- 20a, 20b: Innengehäuseschale
- 22: Sicherungselement
- 24a-24d: Vertiefung
- 26: Außenumfang
- 28: Innenumfang
- 30: Klobenaufnahme
- 32: Kloben
- 34: Mantelgehäuse
- 36: Fortsatz
- 38: Sperrstift
- 40: Umfangsnut
- 42: Blattfeder
- 44: Aufnahmeelement
- 46: Blockierhebel
- 48: Blockierarm
- 50: Steuerfläche
- 52: Nocken
- 54: Ausnehmung
- 56: Basis
- 58: Wandung

## Patentansprüche

1. Zweirad-Schloss, mit einem Sperrriegel (16), welcher zwischen einer Verriegelungsstellung und einer Freigabestellung verstellbar ist, und einer Klobenaufnahme (30) für einen Kloben (32) eines Sicherungsseils, wobei die Klobenaufnahme (30) eine Rasteinrichtung aufweist, an der der-Kloben (32) verrastbar ist, um den Kloben (32) in der Klobenaufnahme (32) zu halten,
**dadurch gekennzeichnet,**
**dass** das Schloss eine Blockiereinrichtung umfasst, welche derart mit dem Sperrriegel (16) gekoppelt ist, dass die Blockiereinrichtung, wenn sich der Sperrriegel (16) in seiner Verriegelungsstellung befindet, eine Sicherungsstellung einnimmt, in der die Blockiereinrichtung die Rasteinrichtung gegen ein Entnehmen des Klobens (32) aus der Klobenaufnahme (30) blockiert, und dass die Blockiereinrichtung, wenn sich der Sperrriegel (16) in seiner Freigabestellung befindet, eine Entsicherungsstellung einnimmt, in der die Blockiereinrichtung die Rasteinrichtung für ein Entnehmen des Klobens (30) aus der Klobenaufnahme (32) freigibt.

2. Zweirad-Schloss nach Anspruch 1,
**dadurch gekennzeichnet,**
**dass** die Rasteinrichtung wenigstens ein bewegliches Rasteelement aufweist, das in Richtung einer Fixierstellung vorgespannt ist, in der das Rastelement in die Klobenaufnahme (30) hineinragt.

3. Zweirad-Schloss nach Anspruch 2,
**dadurch gekennzeichnet ,**
**dass** das Rastelement in seiner Fixierstellung durch die Blockiereinrichtung blockierbar ist.

4. Zweirad-Schloss nach einem der vorhergehenden Ansprüche,
**dadurch gekennzeichnet,**
**dass** die Rasteinrichtung zwei parallel voneinander beabstandete, quer zu ihrer Längsrichtung bewegliche Sperrstifte (38) aufweist, die in Richtung einer Fixierstellung vorgespannt sind, in der die Sperrstifte (38) in die Klobenaufnahme (30) hineinragen.

5. Zweirad-Schloss nach Anspruch 4,
**dadurch gekennzeichnet,**
**dass** die Sperrstifte (38) durch zwei zwischen den Sperrstiften (38) wirksame Federn (42), welche bevorzugt an jeweiligen Endabschnitten der Sperrstifte (38) befestigt sind, vorgespannt sind.

6. Zweirad-Schloss nach Anspruch 2 oder 3,
**dadurch gekennzeichnet,**
**dass** die Blockiereinrichtung wenigstens einen zwischen der Sicherungsstellung und der Entsicherungsstellung verstellbaren Blockierarm (48) aufweist, der in der Sicherungsstellung das Rastelement hintergreift und somit in seiner Fixierstellung blockiert, wenn sich der Sperrriegel (16) in seiner Verriegelungsstellung befindet, und der in der Entsicherungsstellung das Rastelement für ein Zurückweichen aus der Klobenaufnahme (30) freigibt, wenn sich der Sperrriegel (16) in seiner Freigabestellung befindet.

7. Zweirad-Schloss nach Anspruch 4 oder 5,
**dadurch gekennzeichnet,**
**dass** die Blockiereinrichtung zwei zwischen der Sicherungsstellung und der Entsicherungsstellung verstellbare Blockierarme (48) aufweist, die in der Sicherungsstellung die Sperrstifte (38) umgreifen und somit in ihrer Fixierstellung blockieren, wenn sich der Sperrriegel (16) in seiner Verriegelungsstellung befindet, und die in der Entsicherungsstellung die Sperrstifte (38) für ein Zurückweichen aus der Klobenaufnahme (30) freigeben, wenn sich der Sperrriegel (16) in seiner Freigabestellung befindet.

8. Zweirad-Schloss nach Anspruch 7,
**dadurch gekennzeichnet,**
**dass** die Blockiereinrichtung in einem Mantelgehäuse (34) aufgenommen ist, welches ausgebildet ist, einem gewaltsamen Auseinanderbiegen der Blockierarme (48) entgegenzuwirken.

9. Zweirad-Schloss nach einem der vorhergehenden Ansprüche,
**dadurch gekennzeichnet,**
**dass** ein Gehäuse (34) der Blockiereinrichtung einen Fortsatz (36) aufweist, der die Blockiereinrichtung außerhalb der Klobenaufnahme (30) zumindest teilweise überdeckt.

10. Zweirad-Schloss nach einem der vorhergehenden Ansprüche,
**dadurch gekennzeichnet,**
**dass** die Blockiereinrichtung um eine Drehachse (A) zwischen der Sicherungsstellung und der Entsicherungsstellung schwenkbar ist.

11. Zweirad-Schloss nach einem der vorhergehenden Ansprüche,
**dadurch gekennzeichnet,**
**dass** die Blockiereinrichtung einen Nocken (52) aufweist, welcher mit einer an dem Sperrriegel (16) vorgesehenen Steuerfläche (50) derart zusammenwirkt, dass die Blockiereinrichtung in die Sicherungsstellung bewegt wird, wenn der Sperrriegel (16) in die Verriegelungsstellung verstellt wird.

12. Zweirad-Schloss nach Anspruch 11,
**dadurch gekennzeichnet,**
**dass** die Blockiereinrichtung durch eine Feder in Richtung der Entsicherungsstellung derart vorgespannt ist, dass der Nocken (52) an der Steuerfläche (50) anliegt.

13. Zweirad-Schloss nach Anspruch 11 oder 12,
**dadurch gekennzeichnet,**
**dass** die Steuerfläche (50) eine Ausnehmung (54) aufweist, in welcher der Nocken (52) aufgenommen ist, wenn sich der Sperrriegel (16) in der Freigabestellung befindet.
